# EUROPEAN PATENT SPECIFICATION

(11) **EP 3 401 779 B1**
(45) Date of publication and mention of the grant of the patent: **17.08.2022**
(21) Application number: 16883457.0
(22) Date of filing: 29.12.2016
(51) Int. Cl.: G06F 3/0484, G06F 9/445, G06F 9/451, G06F 21/31, G06Q 20/32, G06Q 20/38, G06F 3/01, G06F 3/0488

(54) **METHOD AND APPARATUS FOR INVOKING FUNCTION IN APPLICATION**
VERFAHREN UND VORRICHTUNG ZUM AUFRUFEN EINER FUNKTION IN EINER ANWENDUNG
PROCÉDÉ ET APPAREIL D'APPEL D'UNE FONCTION DANS UNE APPLICATION

(30) Priority: 08.01.2016 CN 201610012075
(43) Date of publication of application: 14.11.2018
(73) Proprietor: Advanced New Technologies Co., Ltd., George Town, Grand Cayman KY1-9008 (KY)
(72) Inventor: WANG, Jing, Hangzhou 310099 (CN); TONG, Wenxia, Hangzhou 310099 (CN)
(74) Representative: Fish & Richardson P.C.
(86) International application number: PCT/CN2016/112852
(87) International publication number: WO 2017/118332

(56) References cited:
- EP-A2- 2 674 889
- WO-A1-2015/110053
- CN-A- 102 541 450
- CN-A- 103 942 680
- CN-A- 104 123 164
- CN-A- 104 978 014
- HAO LÜ ET AL: "Gesture On: Enabling Always-On Touch Gestures for Fast Mobile Access from the Device Standby Mode", HUMAN FACTORS IN COMPUTING SYSTEMS, ACM, 2 PENN PLAZA, SUITE 701 NEW YORK NY 10121-0701 USA, 18 April 2015 (2015-04-18), pages 3355-3364, XP058068495, DOI: 10.1145/2702123.2702610 ISBN: 978-1-4503-3145-6

## Description

### TECHNICAL FIELD

The present patent relates to the field of information processing technologies, and in particular, to a method and an apparatus for invoking a function in an application.

### BACKGROUND

A feature of smart devices such as mobile phones, tablet computers, and smart watches is that the users can customize and install a wide variety of applications, so that the device functionalities can be expanded. With the development of smart devices, the functions of various applications become more powerful. Even a plurality of functions have been integrated in many applications to meet the various needs of users.

One problem that the integration of functions in applications may bring is the complexity of user operations. At present, when a user uses a smart device such as a mobile phone to invoke a function in an application, a typical operation process is as follows: the user takes out the mobile phone → wakes the mobile phone → unlocks the mobile phone → identifies the APP you want to use → runs the APP → jumps to the required function sub-interface (via menus, buttons, etc.) → performs related operations on the sub-interface. It can be seen that in actual application, the use of a function in an application requires many steps to be implemented, which is not only inconvenient in operation but also consumes a lot of time for the user.

EP 2 674 889 A2 discloses a mobile device and control method thereof. The mobile device includes a display unit, a sensor configured to sense user's touch done on a surface of the display unit In a disabled state of the display unit, a storage unit configured to store preset gesture information, a controller configured to enable the display unit when a user's touch operation matched with the gesture information is sensed, execute a wallet application, and display an execution screen, and a communication unit configured to transmit information for a selected payment option to an external apparatus when the payment option is selected on the execution screen and perform a payment.

Hao Lu and Yang Li : "Gesture On: Enabling Always-On Touch Gestures for Fast Mobile Access from the Device Standby Mode", published in the Proceedings of the 33rd Annual ACM Conference on Human Factors in Computing Systems, in April 2015 discloses a system that enables touchscreen gestures when a device is in standby mode.

WO 2015/110053 A1 discloses a method and an apparatus for controlling a portable intelligent terminal, including: invoking, by an invoking module when the portable intelligent terminal is in a screen-locked and bright screen state, a sensor of the portable intelligent terminal to monitor a sensing signal; identifying, by an identifying module, the monitored sensing signal, to obtain an APP interface triggering instruction or an APP operation instruction corresponding to the sensing signal; and unlocking, by an unlocking and triggering module, the portable intelligent terminal, and triggering and displaying a corresponding APP interface on a screen according to the APP interface triggering instruction or performing, according to the APP operation instruction, an instruction operation on an APP corresponding to the instruction.

### SUMMARY

In view of the foregoing technical problems, the present patent provides a method and an apparatus for invoking a function in an application. The present invention is defined by the claims.

According to the technical solutions provided in the present patent, a predetermined user operation and a predetermined button provided on the user equipment are used as a trigger condition for invoking a function in an application, and an operation of a user is detected while the predetermined button is pressed. When the obtained operation matches the predetermined user operation, a particular function in a particular application is automatically invoked if it is determined that the user inputs correct authentication information, thereby avoiding tedious operation steps such as waking a device, unlocking a device, etc., and implementing quick invoking of a particular function in a particular application.

It should be understood that the foregoing general description and the following detailed description are merely exemplary and impose no limitation on the present patent.

### BRIEF DESCRIPTION OF DRAWINGS

To describe the technical solutions in the implementations of the present patent or the existing technology more clearly, the following briefly describes the accompanying drawings required for describing the implementations or the existing technology. Apparently, the accompanying drawings in the following description show merely some implementations of the present patent, and a person of ordinary skill in the art can still derive other drawings from these accompanying drawings.
FIG. 1 is a schematic flowchart illustrating a method for invoking a function in an application according to the present patent;
FIG. 2 is a schematic diagram illustrating a first specific application scenario according to the solutions of the present patent;
FIG. 3 is a schematic diagram illustrating a second specific application scenario according to the solutions of the present patent;
FIG. 4 is a schematic diagram illustrating a third specific application scenario according to the solutions of the present patent;
FIG. 5 is a schematic diagram illustrating a fourth specific application scenario according to the solutions of the present patent;
FIG. 6 is a schematic structural diagram illustrating an apparatus for invoking a function in an application according to the present patent;
FIG. 7 is a schematic structural diagram illustrating a two-dimensional code payment apparatus according to the present patent;
FIG. 8 is a schematic structural diagram illustrating a device used to configure the apparatus provided in the present patent.

### DESCRIPTION OF EMBODIMENTS

To make a person skilled in the art understand the technical solutions in the present patent better, the following describes in detail the technical solutions in the implementations of the present patent with reference to the accompanying drawings in the implementations of the present patent. Apparently, the described implementations are merely some rather than all of the implementations of the present patent. All other implementations obtained by a person of ordinary skill in the art based on the implementations of the present patent shall fall within the protection scope of the present patent.

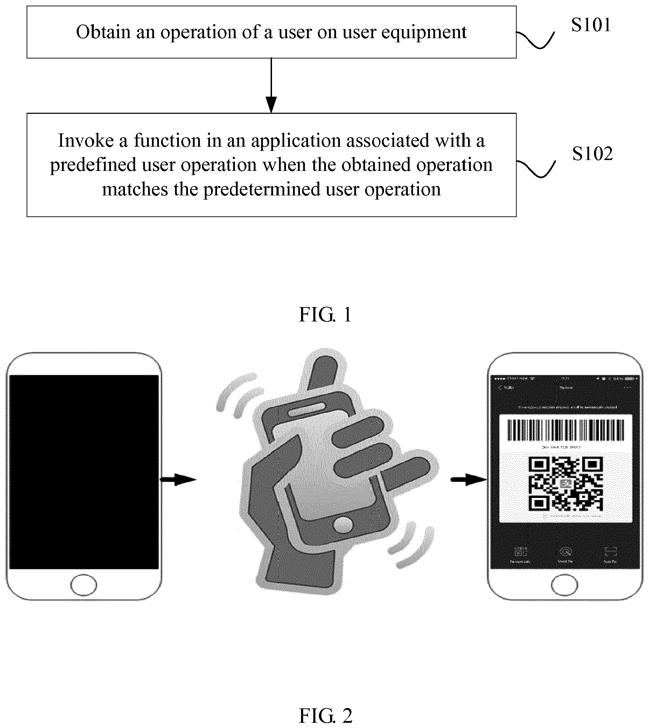

As shown in FIG. 1, FIG. 1 is a flowchart illustrating a method for invoking a function in an application according to the present patent. The method can be executed by a mobile terminal, for example, a mobile phone. The method can specifically include the following steps.
S101. Obtain an operation of a user on user equipment.
S102. Invoke a function in an application associated with a predetermined user operation when the obtained operation matches the predetermined user operation.

The solution for invoking a function in an application according to the present patent can be applied to user equipment provided with a sensing module, a button, and a touch input module. The sensing module can include a gravity sensor, an acceleration sensor, a gyroscope, a distance sensor, a fingerprint sensor, etc. The button can include a physical button or a virtual touch key on the user equipment, a virtual key in a touchscreen operating system interface or a specific application interface, etc. The user equipment can be a composite device such as a mobile phone, a tablet computer, and a smart watch, or a single function device such as an electronic business card, an electronic tag, etc., which is not limited in the present patent.

In the present patent, the invoking a function in an application can be a direct jump to display a certain functional interface in a specific application, such as a payment barcode display interface in a payment application, a chat interface with a specific user in an instant messaging application, etc. Alternatively, it can be directly triggering the execution of a specific function in a specific application, such as a play/pause/switch function in a media playing application, an information refresh function in an information type application, etc.

In the solution of the present patent, a predetermined user operation is used as a method for quickly triggering a specific function in a specific application, to implement quick display of a specific function interface in a specific application, or a quick execution of a specific function interface in a specific application. As such, a detection result of the user operation can be obtained when the device is powered on. If the predetermined user operation is detected, the specific function in the specific application associated with the predetermined user operation is directly invoked. Operations such as unlocking a device, identifying an application, etc., can be avoided. In addition, a specific function of a specific application can be directly invoked, instead of just opening a main interface of the application, thereby further reducing the quantity of user operations in the application and improving operating efficiency.

In actual use, the specific application can be started in advance and run on the back end of the system, so as to implement quick invocation when needed. Alternatively, the specific application is not started in advance. In this case, the device can start the specific application after detecting the predetermined user operation and run the specific application on the front end or back end of the system. This is to implement quick invocation of functions in the application and to reduce occupation of memory resources.

In actual use, after detecting a predetermined user operation, the device can first find out whether a corresponding application has been running on the back end of the system. If so, directly switch to the application and jump to a specific function interface for displaying an information image. If it is not found that the application is running on the back end, the device starts the application and runs the application on the front end or back end of the system, and jumps to a specific function interface of the application or performs a specific function in the application.

In an actual application, an association between a predetermined user operation and an operation of "invoking a specific function" can be established in advance, so that the specific function can be directly invoked after the predetermined user operation is detected, instead of entering a main interface of the application. Specifically, related settings can be performed in the system of the mobile terminal, so as to establish an association relationship between a predetermined user operation and invocation of a specific function. Thus, when the predetermined user operation is detected, the specific function can be quickly invoked; or it can be set in an application installed in the system whether the specific function in the application supports quick invocation. If yes, the specific function is associated with a predetermined user operation. For example, in a payment application of the mobile terminal, a two-dimensional code payment interface can be set to be quickly invoked through a predetermined user operation and can be associated with a specific predetermined user operation in the setting interface of the payment application. Alternatively, it can be set by default in the system and allows a user to perform settings for associating a predetermined user operation. In the present patent, the specific application and the specific function interface can be set in advance by the user, set by the system, or set in another method. The specific predetermined user operation can also be set by the user.

In a specific implementation of the present patent, quick invocation of a function in an application can be implemented by using a sensing module configured on the user equipment. Accordingly, a specific implementation of S101 is obtaining a result of detecting a user operation by the sensing module; a specific implementation of S102 is invoking the function in the application associated with the predetermined user operation after input of the predetermined user operation is detected.

The use of barcodes, two-dimensional codes, and other images for information exchange is a relatively common application. Common application scenarios include payment, access control, and exchange of business cards. However, currently it is still tedious for users to use mobile phones and other smart devices to perform image information exchange. In an example, the mobile phone two-dimensional code is used for quick payment. A typical operation process is as follows: the user takes out the mobile phone → wakes the mobile phone → unlocks the mobile phone → identifies a payment function APP → runs the APP → identifies a two-dimensional code function sub-page → executes a two-dimensional code display operation. In a practical application it can be seen that a complete two-dimensional code display operation requires many operation steps to achieve, which is not only inconvenient for the user, but also cannot be well adapted to application scenarios with a large number of users, such as supermarkets, buses, etc.

In the present implementation, an application scenario of using a mobile phone barcode (including one-dimensional barcode, two-dimensional barcode, etc.) for quick payment is used as an example to describe in detail the solution of the present patent. To be specific, a payment interface with the payment barcode can be quickly invoked in a payment application according to the solution of the present patent.

The mobile phone user can select an operation mode as a trigger password for payment bar code display in advance. The operation can be implemented by using a sensing module such as a gravity sensor, an acceleration sensor, a gyroscope, a distance sensor, and a fingerprint sensor on the mobile phone. The following gives some examples of user operations:

Using a gravity sensor: the gravity sensor is also called G-sensor and a special acceleration sensor. The gravity sensing technology is implemented using piezoelectric effects. The horizontal direction is determined by measuring the magnitude of the force in two orthogonal directions of the gravity of the weight inside the mobile phone. The mobile phone is placed at the center of gravity sensing when the mobile phone is placed horizontally. By measuring acceleration caused by gravity by using the gravity sensor, the posture of the device relative to the horizontal plane can be calculated. A typical application of a mobile phone gravity sensor is to automatically switch between the landscape mode and the portrait mode of the mobile phone.

In the solution of the present patent, the predetermined user operation can be implemented based on a change in posture when the screen of the mobile phone is substantially perpendicular to a horizontal plane, for example, a change of actions of "placing the mobile phone horizontally"/"placing the mobile phone vertically", "tilt the mobile phone to the left"/"tilt the mobile phone to the right" (the tilt angle reaches a certain threshold), etc. In a practical application, it can be considered that a predetermined user operation is the input when a quantity of consecutive changes of the foregoing operations reaches a preselected threshold.

Using an acceleration sensor: the acceleration sensor is also called accelerometer, line accelerometer, etc. The acceleration sensor can measure linear acceleration generated by various external forces including gravity. Compared with the gravity sensor, the acceleration sensor can sense a linear static/moving state and a movement direction of the mobile phone in addition to the perception of a posture relative to the horizontal plane.

In the solution of the present patent, a predetermined user operation can be implemented based on a change in the movement direction of the mobile phone, for example, up and down shaking of the mobile phone, left and right shaking, or shaking in any approximately straight forward and reverse directions. In a practical application, it can be set that when a quantity of times of continuous shaking such as the foregoing actions reaches a preselected quantity threshold and an amplitude of shaking reaches a preselected amplitude threshold, it is considered that a predetermined user operation is the input.

Using a gyroscope: the gyroscope can measure the angular velocity when an external force acts on an object and the object rotates, and can sense a rotational/static state and a direction of rotation.

In the solution of the present patent, a predetermined user operation can be implemented based on a change in the rotation direction of the mobile phone. For example, a swing operation on the mobile phone, or rotation of the mobile phone in any axial direction. In a practical application, it can be set that when a quantity of times of continuous swinging reaches a preselected quantity threshold and an amplitude of swinging reaches a preselected amplitude threshold, it is considered that a predetermined user operation is the input.

Using a distance sensor: a detection result of the change of a physical quantity can be converted into a distance to measure the relative distance from the module to the object. The distance sensing module can include an optical displacement sensor, a linear proximity sensor, an ultrasonic displacement sensor, etc. based on different physical quantities detected. A common application of the mobile phone distance sensor is the mobile phone is close to the head when the user is answering or making a call, and the distance sensor can measure the distance between the mobile phone and the head. When the distance is reduced to a certain degree, the screen is turned off. When the user removes the mobile phone, the screen is turned on again. This can avoid an unintentional operation during the call, and can save power.

In the solution of the present patent, user operations can be implemented based on changes in the distance between the mobile phone and an object (such as a palm, a wall, etc.), for example, action changes of "approximate to an object"/"removed from an object", where "approximate" and "remove" are determined based on a preselected distance threshold. In a practical application, it can be considered that a predetermined user operation is the input when a quantity of changes of the foregoing actions reaches a preselected threshold. For example, if the user moves the palm to a position close to the screen of the mobile phone, and makes the palm parallel to the screen of the mobile phone, and shakes the palm in opposite directions once each, it is considered that a predetermined user operation is the input.

The predetermined user operation can be implemented in many other methods, which are not listed one by one in the present patent, provided that the predetermined user operation does not conflict with other operations. In addition, it can be understood that two or more sensing modules can be combined to implement the predetermined user operation. For example, the acceleration sensor and the gyroscope are combined to determine a more complex posture/moving state of the mobile phone and form a corresponding user operation.

After the user records the user operation, the mobile phone records and stores the button information. The solution of the present patent does not limit collection algorithms for various types of predetermined user operation information, and a traditional information collection algorithm can be used. Certainly, in some scenarios, some system's default operations of the device can also be used as predetermined user operations. A method of setting the predetermined operation of the user is not limited in the present patent. For example, the predetermined operation is a system default or is set by the user. For another example, the operation is set by the user in the system, or is set by the user in a specific application in the system.

After the predetermined user operation setting is completed, a result of detecting the predetermined user operation by the sensing module can be obtained when the mobile phone is powered on. If the currently detected user operation matches the predetermined user operation, the mobile phone directly jumps to the payment barcode display interface in the payment application, and displays a barcode image for payment, thereby simplifying user operations. The solution of the present patent does not limit matching algorithms for various types of specific operation information, and a traditional matching algorithm can be used.

In the solution of the present patent, when a specific function interface displays an information image, a pre-generated static information image can be obtained, or an information image can be generated in real time. For example, in a quick display scenario of the payment barcode interface in the payment application, when the payment barcode interface is displayed, the information image of the payment barcode can be a static graphic, or can be a dynamically changeable graphic generated in real time.

In an implementation, the detection function of the sensing module can remain in a continuous on state. The sensing module detects a predetermined user operation in real time and can report in an interrupted method. The user equipment can obtain a predetermined user operation detected by the sensing module in an interrupted method, so that the user equipment obtains the predetermined user operation and performs corresponding processing. Thus, as long as the user inputs the predetermined user operation, the payment barcode can be quickly displayed on the screen of the mobile phone, and it can be ensured that the user can use the predetermined operation to trigger displaying of the barcode at any time. In other words, the mobile device can detect a predetermined user operation in real time through the sensing module and can quickly start a related specific function interface by collecting a predetermined user operation.

In an implementation, the result of detecting the user operation by the sensing module can be obtained when the device is in a non-usage state. The non-usage state here can include one or more of a locked state, a sleep state, a standby state, or another state. In this case, the mobile phone can obtain the detection result in some specific states. In these specific states, the mobile phone can quickly start a specific function in a related application by obtaining the collection result of the sensing module.

In the foregoing non-usage states, the lock state can represent a user's restriction on the operation permission of the device. The sleep state and the standby state describe work states of a software or hardware module of the device and are not clearly distinguished in definition. In some cases, the foregoing non-usage states can all exist on one device. For example, some devices will be automatically locked after a period of standby or sleeping, or automatically switch a specific software and hardware module to a standby or sleep state after locking for a period of time. In conclusion, a common feature of the foregoing states is that if the device is currently in these states, it would be more tedious for the user to use the conventional barcode display operation. By applying the solution of the present patent, the user can directly display the barcode under these circumstances without waking the device, unlocking the device, etc. In addition, a time for starting a function of obtaining the detection result of the predetermined user operation can be shortened, and power consumption of the device can be reduced.

In an implementation, it can be set that the sensing module can detect the predetermined user operation only when the device is in the non-usage state to prevent the sensing module from starting for a long period and reduce power consumption.

In an implementation, based on an operation sequence of "first wake up and then unlock" of a general smart device, the sensing module can be set to obtain the detection result in a period "after the user equipment wakes up from the sleep state and before the user equipment is unlocked". Thus, a time for starting a function of obtaining the detection result can be shortened, and the power consumption of the device can be reduced.

In an implementation, the sensing module can also be set to detect the predetermined user operation only when "the user equipment is woken from the sleep state and has not been unlocked". When the screen of the mobile phone is locked and black, the detection function of the sensing module can be disabled and after the mobile phone is woken, the sensor module can be started to detect the predetermined user operation to further reduce the power consumption caused by the sensing module.

In other words, the function of obtaining a detection result of the predetermined user operation or the detection function of the sensing module can be disabled for most of the time when the mobile phone is not used (for example, in a pocket or a purse). When the mobile phone is woken by other means (for example, power button, volume button, etc.), the corresponding function is enabled. Based on the detection result of the predetermined user operation, the following situations may exist:
(1) The user inputs the predetermined user operation, and a payment interface of a payment barcode is quickly displayed. In addition to displaying the payment interface, the mobile phone can be unlocked, or the mobile phone remains in a locked state, which is not limited in the present patent.
(2) The user normally unlocks the mobile phone (through a password, a gesture, etc.), and after unlocking succeeds, the mobile phone is being used, and disables the detection function of the sensing module.
(3) The user does not input any information, which is probably an unintentional operation, and after a period of time, the mobile phone enters the sleep state again, and disables the detection function of the sensing module.

It can be seen that applying the solution of the present patent can further shorten the time for starting the sensing module under the premise of adapting to the basic operating habits of the user, thereby reducing the power consumption of the device.

In this application, the working mode of the sensing module is not particularly limited. For example, the user equipment can detect the predetermined user operation continuously after the user equipment is powered on, or the user equipment can detect the predetermined user operation within a specified time, or the predetermined user operation detection module reports the predetermined user operation in an interrupted method, or the processor in the mobile phone actively invokes the sensing module to work. A specific working mode of the sensing module can be controlled or set based on a specific requirement.

In an implementation, if the user does not perform another operation on the device within a period of time after the barcode display interface is invoked, the display of the barcode image can be stopped to prevent the barcode image from being photographed or stolen and to improve information use security. A duration threshold to stop displaying the barcode image can be set based on an actual requirement, for example, 30 seconds and 60 seconds. A specific implementation to stop displaying the barcode image can be exiting a function interface of a function in a specific application, exiting a specific application, returning to a system standby interface, or restoring the device to a locked state, a sleep state, etc., which is not limited in the present patent.

FIG. 2 is a schematic diagram illustrating a specific implementation scenario of applying the solution of the present patent to merchant payment. When the mobile phone is in a sleep and locked state, the user holds the mobile phone and continuously shaking the mobile phone in any direction for more than three times. When the shaking amplitude reaches a certain requirement, the acceleration sensor detects the operation and matches the operation with a predetermined user operation for authentication. After the authentication succeeds, the payment barcode (including one-dimensional barcode and two-dimensional barcode) image in the payment application is displayed on the screen of the mobile phone. If the user does not perform another operation on the mobile phone for more than 60 seconds, the payment barcode image displayed on the mobile phone screen disappears.

In another specific implementation scenario of the solution of the present patent, a predetermined user operation can be used to implement quick display of a specific merchant interface in a payment application or a shopping application.

Before using the function, the user preselects an association of a predetermined operation (for example, a shaking operation, etc.) with the "current business interface display" function in the payment application or shopping application. When using the function, the user enters a place of business, and then takes out the mobile phone and inputs a predetermined associated operation. The mobile phone matches the operation with a predetermined operation for authentication. After the authentication succeeds, the positioning function of the mobile phone is invoked (for example, a positioning function based on WIFI, GPS, or Bluetooth) to obtain the current location of the mobile phone, and the corresponding business location is further calculated based on the obtained location information, and then relevant information (such as product information, discount information) of the business is displayed on the screen of the mobile phone.

According to the solution of the present patent, detection of a predetermined user operation can also be used in combination with other methods to implement invocation of a specific application. Detecting a user operation by the sensing module is obtained when a predetermined button is pressed.

The user can pre-specify one or more buttons as one of the triggering conditions for invoking a function in an application. The button can be a physical button or a virtual touch key provided on the mobile phone or can be a virtual key in a touchscreen operating system interface or a specific application interface. When the user needs to quickly invoke a function in an application, the user needs to input the predetermined operation while pressing the predetermined button. The device needs to obtain the result of detecting the predetermined user operation by the sensing module, and further needs to determine whether the predetermined button is pressed. When "the predetermined user operation is detected" and "the predetermined button is pressed", the subsequent invocation of the function in the application can be triggered.

The mobile phone payment barcode application scenario is still used as an example. The user can specify the "volume down" button as a predetermined button based on the usage habits. The user presses the "volume down" button by using a finger and shakes the mobile phone at the same time. When detecting that the two conditions are both satisfied, the mobile phone invokes the application to display the payment barcode.

For shortcut operations involving user privacy such as displaying payment barcodes, there may be certain requirements for security. When the foregoing predetermined operation cooperates with the predetermined button to realize invocation of a specific function in a specific application, because the "predetermined button" also belongs to the user's personal private information (predetermined by the user) Such method can effectively confirm whether the current operator of the user equipment is a legitimate user and avoid a loss caused by illegal user's operation on the user equipment. In some cases, the method can also avoid an unintentional operation. For example, when the mobile phone is placed in a purse, quick invocation of a function in an application can be triggered due to excessive shaking and excessively fast frequency, and the combination of the predetermined user operation and the predetermined button can effectively avoid or reduce the occurrence of such non-user subjective triggering.

Other security verification mechanisms can be further added to improve the use security of users. The user is required to input one or more kinds of authentication information after input of the predetermined user operation is detected and before the function in the application is invoked. The authentication information can take various forms such as a text password, a fingerprint, a gesture, facial information, etc. If the authentication information input by the user is correct, the function in the application is invoked; if the authentication information input by the user is incorrect, the function in the application is not invoked.

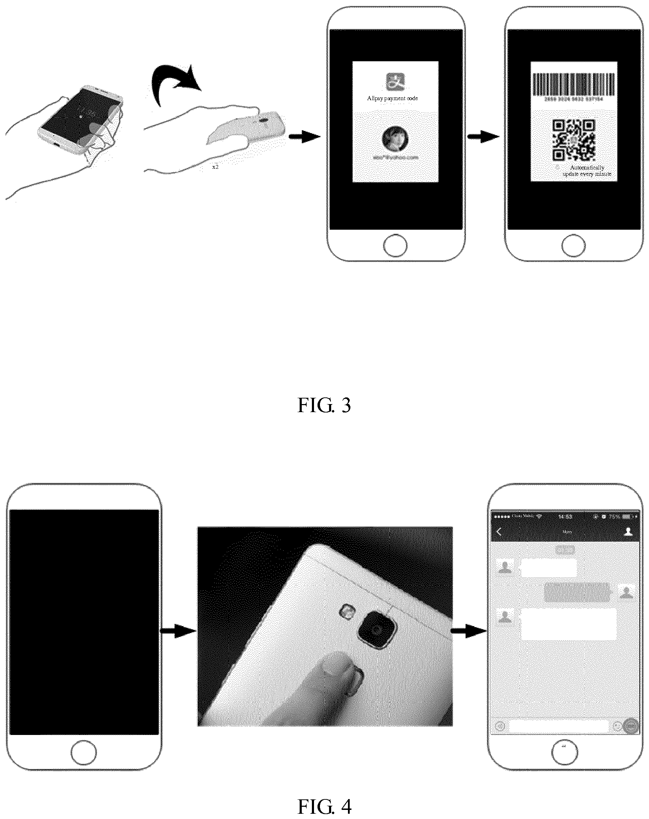

FIG. 3 is a schematic diagram illustrating a specific implementation scenario where the solution of the present patent is applied to merchant payment. When the screen of the mobile phone is black or is locked, or when the mobile phone is in a standby state, the user holds the mobile phone and swings the mobile phone for more than 2 times in an arbitrary approximate axial direction. The swinging amplitude satisfies a specific requirement; the gyroscope detects the operation and matches the operation with the predetermined user operation for authentication. After the authentication succeeds, the payment application is invoked, the screen displays a currently used payment method (which can be modified by the user based on a requirement), and the user is prompted to enter one or more kinds of authentication information.

For example, for some third-party payment applications, if the user does not enable the "keep me logged in" function, the user will be further required to enter a login password of the payment application after the swinging operation is authenticated. The login password can take forms of a text password, a fingerprint, a gesture, facial information, etc. After the user enters the login password, the mobile phone performs authentication on the password locally or sends the login password to the network side for authentication. After the authentication succeeds, the payment barcode is displayed on the screen of the mobile phone.

In another implementation, after the swinging operation is authenticated, a payment method selection interface of the payment application is displayed on the screen of the mobile phone. The user is prompted to enter the unlock password (including a fingerprint and a digital password). After the user enters the correct unlock password, the user taps a payment method identifier, and the corresponding payment barcode is displayed.

It can be understood that the quick invocation of the payment bar code interface in the implementation of the present patent is only used for schematically illustrating "quick invocation of a function in an application", and it is not a limitation on the specific implementation solution and the application scenario of the present patent. In addition, different operations based on the sensing module can be associated with different functions in the same application, or can be associated with functions in different applications, so as to implement quick invocation of multiple functions in different applications.

According to a specific implementation of the present patent, quick invocation of a function in an application can be implemented based on a fingerprint module configured on the user equipment. Here, the fingerprint module can be a module having a series of functions including fingerprint collection, matching operations, authentication, identification determining, etc. Accordingly, a specific implementation of S101 is obtaining a fingerprint input by the user on the fingerprint module; and a specific implementation of S102 is invoking the function in the application associated with the predetermined user operation after input of the fingerprint information is detected.

Instant messaging is one of the application functions frequently used by the users. At present, it is tedious for users to use mobile phones and other smart devices to perform instant messaging chat operations. A typical operation process is as follows: the user takes out the mobile phone → wakes the mobile phone → unlocks the mobile phone → identifies the instant messaging APP → runs the APP → taps the icon of a friend to enter the chat sub-interface → starts chatting. It can be seen that in a practical application, a complete chat operation requires a plurality of steps to be implemented.

The present implementation describes the solution of the present patent in detail by using an example of an instant messaging chat scenario. In the instant messaging application, a chat interface for a specific friend can be quickly invoked according to the solution of the present patent.

In an actual application, an association between the fingerprint information and the operation of "invoking a chat interface for a specific friend" can be established in advance so that the mobile phone can directly jump to the chat interface for the specific friend instead of the main interface after the fingerprint information is detected. Specifically, related settings can be performed in the system of the mobile terminal to establish an association relationship between the fingerprint information and invocation of the chat interface for the specific friend. Thus, when the fingerprint information is detected, the chat interface for the specific friend can be quickly invoked; or it can be set in an application installed in the system whether the chat interface for the specific friend supports quick invocation. If yes, the chat interface for the specific friend is associated with the fingerprint information. For example, in the setting interface of the instant messaging application, the chat interface for the specific friend is set to be quickly invoked through fingerprint information, and it can be associated with specific fingerprint information, or can be set by default in the system. Moreover, the user can be allowed to perform related fingerprint settings. In the present patent, there can be a plurality of chat interfaces for specific friends, and the plurality of chat interfaces can be associated with different pieces of fingerprint information for differentiation.

In an implementation, when fingerprint information is detected by the fingerprint module, a user authentication mechanism can be added through an authentication function of the fingerprint module to improve security. Specifically, after the fingerprint information is detected, the fingerprint information is matched with a preselected fingerprint. If the fingerprint information matches the preselected fingerprint, the chat interface for the specific friend is displayed. The association between the fingerprint information and invocation of the chat interface for the specific friend can be setting specific fingerprint information as a condition for triggering quick invocation of the chat interface for the specific friend. Specifically, the device user needs to record one or more pieces of fingerprint information of the user in advance, and the fingerprint module generates authenticated fingerprint information and stores the authenticated fingerprint information. In a practical application, after the fingerprint module of the user equipment detects the fingerprint information, the fingerprint module determines whether the detected fingerprint information matches the pre-stored authentication fingerprint information. Only when the detected fingerprint information matches the pre-stored authentication fingerprint information, the chat interface for the specific friend is displayed. When the detected fingerprint information does not match the pre-stored authenticated fingerprint information (which can include a situation that no fingerprint information is detected), the chat interface for the specific friend is not displayed on the screen of the user equipment. Such triggering mechanism can effectively confirm whether the current operator of the user equipment is a legitimate user and avoid adverse consequences caused by illegal user's operation on the user equipment. The solution of the present patent does not limit specific fingerprint collection and authentication algorithms, and traditional fingerprint collection and authentication algorithms can be used.

In an implementation, the detection function of the fingerprint module can remain in a continuous on state. The fingerprint module detects fingerprint information of the user in real time and can report in an interrupted method. The user equipment can obtain fingerprint information detected by the fingerprint module in an interrupted method, so that the user equipment obtains the fingerprint information and performs corresponding processing. Thus, as long as the user inputs the fingerprint information, the chat interface for the specific friend can be quickly displayed on the screen of the mobile phone, and it can be ensured that the user can use, at any time, the fingerprint to quickly trigger displaying of the chat interface for the specific friend. In other words, the mobile device can detect fingerprint information in real time through the sensing module, and can quickly start a related chat interface for a specific friend by collecting fingerprint information.

In an implementation, a result of detecting fingerprint information by the fingerprint module can be obtained when the device is in a non-usage state. The non-usage state here can include one or more of a locked state, a sleep state, a standby state, or another state. In this case, the mobile phone can collect fingerprint information in some specific states. In these specific states, the mobile phone can quickly start the chat interface for the specific friend in a related application by collecting the fingerprint information. For descriptions of the "non-usage state", refer to the foregoing implementation. Details are not repeatedly described in the present implementation. By applying the solution of the present patent, the user can directly display the chat interface for the specific friend under these circumstances without waking the device, unlocking the device, etc. Thus, a time for starting a function of obtaining the fingerprint detection result can be shortened, and power consumption of the device can be reduced.

In an implementation, it can be set that the fingerprint module can detect fingerprint information only when the device is in the non-usage state, so as to prevent the fingerprint module from starting for a long period and reduce power consumption. For example, when the screen of the mobile phone is locked and is black, the detection function of the fingerprint module can be disabled, and the fingerprint module can be started to perform fingerprint detection after the mobile phone is woken.

In an implementation, based on an operation sequence of "first wake up and then unlock" of a general smart device, the fingerprint module can be set to obtain the detection result in a period "after the user equipment wakes up from the sleep state and before the user equipment is unlocked". Thus, a time for starting a function of obtaining the fingerprint detection result can be shortened, and power consumption of the device can be reduced.

In an implementation, the fingerprint module can also be set to detect fingerprint information only when "the user equipment is woken from the sleep state and has not been unlocked". For example, when the screen of the mobile phone is locked and black, the detection function of the fingerprint module can be disabled. After the mobile phone is woken, the fingerprint module can be started to detect a fingerprint, so as to further reduce the power consumption caused by the fingerprint module.

In other words, the function of obtaining a fingerprint detection result or the detection function of the fingerprint module can be disabled for most of the time when the mobile phone is not used (for example, in a pocket or a purse). When the mobile phone is woken by other means (for example, power button, volume button, etc.), the corresponding function is enabled. Based on the fingerprint detection result, the following situations may exist:
(1) The user inputs fingerprint information, and the chat interface for the specific friend is quickly displayed. To help subsequent chat operations of the user, the mobile phone can be further unlocked.
(2) The user normally unlocks the mobile phone (through a password, a gesture, etc.). After unlocking succeeds, the mobile phone is being used, and disables the detection function of the fingerprint module.
(3) The user does not input any information, which is probably an unintentional operation. After a period of time, the mobile phone enters the sleep state again, and disables the detection function of the fingerprint module.

It can be seen that applying the solution of the present patent can further shorten the time for starting the fingerprint module under the premise of adapting to the basic operating habits of the user, thereby reducing the power consumption of the device.

In this application, the working mode of the fingerprint module is not particularly limited. For example, the user equipment can detect a fingerprint continuously after the user equipment is powered on, or the user equipment can detect a fingerprint within a specified time, or the fingerprint detection module reports a fingerprint in an interrupted method, or the processor in the mobile phone actively invokes the fingerprint module to work. A specific working mode of the fingerprint module can be controlled or set based on a specific requirement.

FIG. 4 is a schematic diagram illustrating a specific implementation scenario for applying the solution of the present patent to invocation of a specific function in an instant messaging application. When the mobile phone is in a sleep state and is locked, the user places a finger on a fingerprint collector on the back of the mobile phone. The fingerprint module collects fingerprint information and performs authentication on the fingerprint information. After the authentication succeeds, a chat interface image for a specific friend in the instant messaging application is displayed on the screen of the mobile phone, and the user can directly start chatting with the specific friend (Marry).

In an implementation, the device can also be unlocked by using fingerprint information. In this case, the "unlock with a fingerprint" function and the "quickly display a chat interface for a specific friend with a fingerprint" function can be distinguished as follows:

The user can record in advance authenticated fingerprint information for displaying a chat interface for a specific friend (hereinafter referred to as "display fingerprint") and authenticated fingerprint information for unlocking the user equipment (hereinafter referred to as "unlock fingerprint"). Then, an association between the "display fingerprint" and the operation of "invoking a chat interface for a specific friend in a specific instant application" and an association between the "unlock fingerprint" and the operation of "unlocking the user equipment" are separately established. Further, when the user equipment is in the locked state, after the fingerprint module detects fingerprint information input by the user, the fingerprint module performs different processing based on a status of matching between the currently detected fingerprint information and the pre-stored fingerprint information, and the specific processing method is as follows:

When the user equipment is in the locked state, a result of detecting the fingerprint information by the fingerprint module is obtained; if no fingerprint information is detected, no operation is performed. If fingerprint information is detected, if the detected fingerprint information matches the "display fingerprint", a function of chatting with the specific friend in the chat interface for a specific friend is invoked, so as to display the chat interface for the specific friend on the screen of the user equipment. However, if the detected fingerprint information matches the "unlock fingerprint", the user equipment is unlocked.

For example, based on usage habits, the user can record the fingerprint of the right index finger as the "unlock fingerprint" and the fingerprint of the right middle finger as the "display fingerprint". In actual use, after the user takes out the mobile phone and executes the wake-up operation, the screen of the mobile phone displays an unlock prompt. If the user needs to quickly display the chat interface for the specific friend, the middle finger is placed on the fingerprint collector. After the matching is successful, the application is invoked and the chat interface for the specific friend is displayed. If the user needs to use other functions of the mobile phone, the index finger is placed on the fingerprint collector. After the matching is successful, the mobile phone is unlocked based on the default mode. Thus, the "quick display" operation and the "unlock with a fingerprint" operation can be effectively distinguished without affecting normal usage habits of the user.

In an implementation, the same fingerprint can also be used to implement both the function of unlocking and the function of quickly displaying the chat interface for the specific friend. Specifically, the same fingerprint information of the user can be recorded, and can be used as the fingerprint used for unlocking and the fingerprint used for quickly displaying the chat interface for the specific friend, and duration of fingerprint collection can be set to distinguish whether the collected fingerprint is used for unlocking or quickly displaying the chat interface for the specific friend. For example, the fingerprint detection module collects the user's fingerprint information, and records duration in which the user's fingerprint stays on the fingerprint sensor. If the duration is within Is, the collected fingerprint is considered as the fingerprint used for unlocking, and the device is unlocked. If the duration exceeds Is, the collected fingerprint is considered as the fingerprint used for quickly displaying the chat interface for the specific friend (for example, a specific friend chat interface page in the instant messaging application), and the chat interface for the specific friend is quickly invoked. Certainly, in some other scenarios, there can be different methods to implement that the same fingerprint is used for unlocking and quickly displaying a chat interface for a specific friend. For example, the fingerprint sensor and a pressure sensor can be integrated together, and whether the fingerprint is used for unlocking or quickly displaying a chat interface for a specific friend is determined based on the pressure detected during fingerprint collection.

It can be understood that in an implementation, different fingerprints or different operation methods of the same fingerprint can be used to distinguish different friends (for example, different times in which the finger stays on the fingerprint collector, different pressures, etc.), so as to implement quick display of chat interfaces for different specific friends.

In an implementation, fingerprint information detection can also be combined with other methods to implement invocation of a chat interface for a specific friend in a specific application. For example, the user can pre-specify one or more buttons as the trigger password for displaying a chat interface for a specific friend. The button can be a physical button or a virtual touch key provided on the mobile phone, or a virtual key in a touchscreen operating system interface or a specific application interface. When the user needs to quickly display a chat interface for a specific friend, in addition to fingerprint information, the user further needs to press a self-defined button. The device needs to obtain a result of detecting the fingerprint information by the fingerprint module, and further needs to determine whether the predetermined button is pressed, and only when "the fingerprint information is detected" and "the predetermined button is pressed", the chat interface for the specific friend can be displayed subsequently.

For example, the user can specify a "volume down" button as a predetermined key based on usage habits. In actual use, the user takes out the mobile phone, places a finger (for example, the right index finger) on the fingerprint collector, and simultaneously presses the "volume down" button with another finger (for example, the right thumb). After detecting that the two conditions are both satisfied, the mobile phone invokes the instant messaging application to display a chat interface for a specific friend.

In some implementations, the fingerprint information can also be used as a method for triggering quick display of a chat interface for a specific friend, and no actual authentication is required for the detected fingerprint information. In other words, any fingerprint information can trigger quick display of a chat interface for a specific friend. For example, when the fingerprint information and the predetermined button are combined to display a chat interface for a specific friend in a specific application, since the "predetermined button" also belongs to the user's personal private information (predetermined by the user), the chat interface for the specific friend can be started without comparing the currently detected fingerprint information with the authenticated fingerprint information, the security of the chat can be ensured, and the fingerprint matching unlocking mechanism is not affected. Certainly, in some other scenarios, after fingerprint information is detected, a specific function interface in a specific application can be invoked without performing a matching authentication process on the fingerprint information. For example, when the mobile device is in a working state, if fingerprint information is detected, (for example, if the user places a finger on the fingerprint collector), the chat interface for the specific friend in the instant messaging application can be invoked.

It can be understood that the quick invocation of a chat interface for a specific friend in the implementation of the present patent is only used for schematically illustrating "quick invocation of a function in an application", and it is not a limitation on the specific implementation solution and the application scenario of the present patent. In addition, different fingerprints or different operation methods of the same fingerprint (for example, different times in which the finger stays on the fingerprint collector, different pressures, etc.) can be associated with different functions in the same application, and can also be associated with functions in a plurality of different applications, so as to achieve quick avocation of a plurality of different application functions.

In an implementation of the present patent, quick invocation of a function in an application can be implemented based a button configured on the user equipment, a touch input module, etc. The touch input module here can include a touchscreen, a touchpad, and other independent touch input module. Accordingly, a specific implementation of S101 is obtaining an operation on the user equipment, where the operation is a press operation on the button of the device and a touch gesture input on the touch input module; and a specific implementation of S102 is invoking a function in an application associated with the predetermined user operation when the operation matches an operation of pressing a predetermined button or matches a predetermined touch gesture.

Media playback is one of the application functions frequently used by users. At present, when a user controls media playback, a typical operation process is as follows: the user takes out the mobile phone → wakes the mobile phone → unlocks the mobile phone → identifies a media playback APP → runs the APP → taps play/pause/switch buttons and other function buttons to achieve control. It can be seen in a practical application, a plurality of steps are required each time controlling media playback.

The present implementation describes the solution of the present patent in detail by using an application scenario of instant media playback control as an example. In a media playback application, media playback can be quickly controlled according to the solution of the present patent.

In a practical application, an association between an operation mode and a specific playback control function (for example, play, pause, stop, switch to a previous media file, switch to a subsequent media file, etc.) in a media playback application can be established in advance, so that after the predetermined user operation is detected, the mobile terminal can directly trigger the function instead of invoking the application's main interface. Specifically, related settings can be performed in the system of the mobile terminal, so as to establish an association relationship between fingerprint information and invoking a specific playback control function; or it can be set in an application installed in the system whether a specific playback control function supports quick invocation. If yes, the specific playback control function is associated with a predetermined user operation. For example, a specific playback control function is set, in a setting interface of a media playback application, to be quickly invoked through a predetermined user operation, and can be associated with a specific predetermined user operation; or it can be set by default in the system and allows a user to perform settings for associating a predetermined user operation. In the present patent, there can be a plurality of specific playback control functions, and the plurality of specific playback control functions can be associated with different predetermined user operations for differentiation.

The mobile phone user can preselect one or more operation modes as the trigger password for invoking a specific playback control function. The operation can be implemented by using a physical button on the mobile phone (for example, a power button, a volume up button, a volume down button, etc., a home button of an iOS mobile phone, or any button of a keyboard mobile phone) or a virtual touch key (for example, a home key, a back key, a menu key, etc. of an Android mobile phone), or can be implemented by using a virtual key in an operating system of a mobile phone with a touchscreen or a specific application interface, or specific touch gestures. The following gives some examples of user operations:

Pressing a button: one or more buttons with no preselected function are provided on some mobile phones or operating systems, and the user can define the function of the button, such as screenshots, mute, or start a specific application. These buttons can be directly used to implement the user operations in the solution of the present patent.

Pressing and holding a button: the button includes a physical button, a virtual touch key, or a virtual key in the mobile phone interface. The "pressing and holding" criterion is based on the configuration parameters of the operating system, which is not limited in the present patent.

Pressing a combination of two or more buttons simultaneously: the combination can be a combination of buttons of the same type, for example, simultaneously pressing a power button and a volume down button (which are both physical buttons). Moreover, the combination can be a combination of different types of buttons, for example, simultaneously pressing a power button (physical button) and a back key (virtual touch key).

Pressing two or more buttons successively in a specific order: the buttons can be a combination of buttons of the same type, for example, entering a password sequence; or can be a combination of different types of buttons. In addition, a time for completing the entering is limited.

Specific touch gestures: a variety of touch gestures can be obtained based on combinations of tap/tap and hold/slide, single finger/multi-finger touch, and specific screen positions, for example, successively tapping the screen twice, sliding from the bottom of the screen to the top of the screen, tapping and holding any position on the screen with three fingers, etc., and these gestures can all be used as user operations. In addition, a specific slide track can also be used as a user operation, for example, a "Z" shape is drawn on the screen, a "V" shape is drawn on the screen, etc. The touch gesture can be implemented based on a touchscreen, or can be implemented based on an independent touch device such as a touchpad.

The user operation can be implemented in many other methods, which are not listed one by one in the present patent, provided that the user operation does not conflict with other operations. After the user records the user operation, the mobile phone records and stores the button information. Certainly, in some scenarios, some system's default operations of the device can also be used as predetermined user operations. A method of setting the predetermined operation of the user is not limited in the present patent. For example, the predetermined operation is a system default or is set by the user. For example, the predetermined operation is set by the user in the system, or is set by the user in a specific application in the system.

In an implementation, in order to ensure that the user can use the predetermined operation to quickly trigger the specific playback control function, the function of detecting the user's input can be set to be continuously enabled, so that the specific playback control function can be triggered once the user inputs the predetermined operation information.

In an implementation, the user's input behavior can be detected when the device is in a non-usage state. The non-usage state can include one or more of a locked state, a sleep state, a standby state, etc. For descriptions of the "non-usage state", refer to the foregoing implementation. Details are not repeatedly described in the present implementation. The foregoing solution can enable the user to directly invoke the specific playback control function without waking up the device, unlocking the device, etc., and in addition, can avoid power consumption caused by long-term startup of the input detection function.

In an implementation of the present patent, based on an operation sequence of "first wake up and then unlock" of a general smart device, a time for detecting the user's input behavior can be set to a period "after the user equipment wakes up from the sleep state and before the user equipment is unlocked". In other words, the function of detecting the user's input behavior can be disabled for most of the time when the mobile phone is not used (for example, in a pocket or a purse). When the mobile phone is woken by other means (for example, power button, volume button, etc.), the input detection function is enabled, and the following situations may exist:
(1) The user inputs a predetermined user operation to invoke a particular playback control function in a media play application. In addition to the invocation function, the mobile phone can be unlocked, or the mobile phone remains in a locked state, which is not limited in the present patent.
(2) The user normally unlocks the mobile phone (through a password, a gesture, etc.), and after unlocking succeeds, the mobile phone is being used, and disables the input detection function.
(3) The user does not input any information, which is probably an unintentional operation, and after a period of time, the mobile phone enters the sleep state again, and disables the input detection function.

It can be seen that applying the foregoing solution can further shorten the time for enabling the input detection function, under the premise of adapting to the basic operating habits of the user, thereby reducing the power consumption of the device.

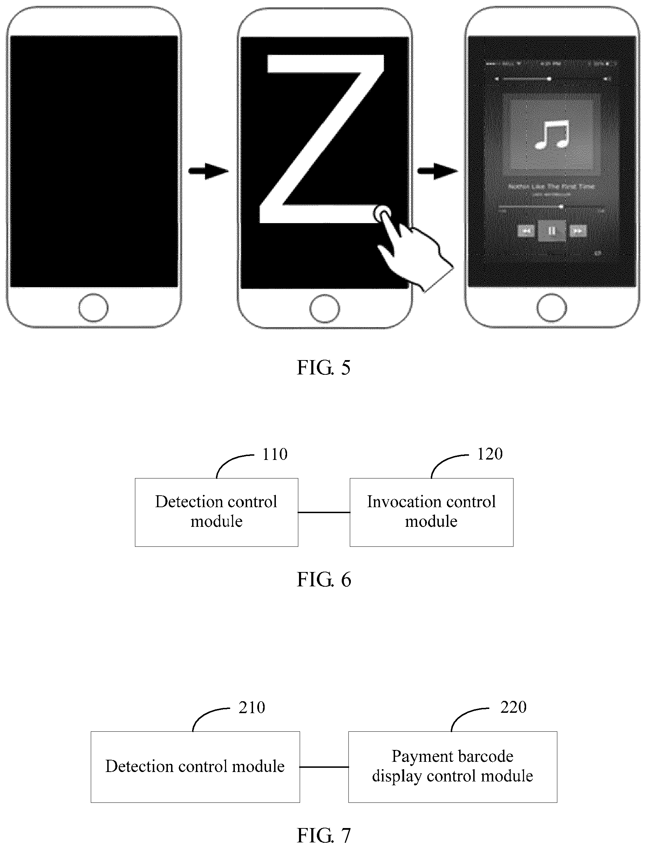

FIG. 5 is a schematic diagram illustrating a specific implementation scenario of applying the solution of the present patent to a media playback scenario. When the mobile phone is in a sleep state and is locked, the user draws a "Z"-shaped pattern on the screen of the mobile phone using a gesture, and the mobile phone matches the pattern with a pre-stored user operation gesture for authentication. After the authentication succeeds, the "play" function in the media playback application is triggered.

Other security verification mechanisms can be further added to improve the security of the use of specific application-specific functions (such as display of two-dimensional code payment). For example, the user can be required to input one or more kinds of authentication information after input of the predetermined user operation is detected and before the specific function is invoked. The authentication information can take various forms such as a text password, a fingerprint, a gesture, etc. If the authentication information input by the user is correct, the specific function is invoked; if the authentication information input by the user is incorrect, the specific function is not invoked.

In an implementation, a predetermined user operation can also be used to unlock the device. To distinguish between the "Unlock using a predetermined user operation" function and the "quickly invoke a specific playback control function using a predetermined user operation" function, the following solution is provided:

The user can record in advance a predetermined user operation for invoking a specific playback control function (hereinafter referred to as "invoke operation") and a predetermined user operation for unlocking the user equipment (hereinafter referred to as "unlock operation"). An association between the "invoke operation" and the "function of invoking a specific playback control function in a media playback application" and an association between the "unlock operation" and "unlock the user equipment" are established. Further, when the user equipment is in the locked state, after the input detection function detects an operation currently input by the user, different processing is performed based on a status of matching between the currently detected operation and the pre-stored predetermined user operation. The specific processing method is as follows:

An input behavior of the user is detected when the user equipment is in the locked state; if no user operation is detected, no processing is performed; if a user operation is detected, if the currently detected user operation matches the "invoke operation", the specific playback control function in the specific application is invoked; or if the currently detected user operation matches the "unlock operation", the user equipment is unlocked.

For example, assuming that the mobile phone is unlocked by using a graphic, the user can record a gesture drawing graphic "N" as the "unlock operation" and record a gesture drawing graphic "Z" as the "invoke operation" based on usage habits. In actual use, after the user takes out the mobile phone and executes the wake-up operation, the screen of the mobile phone invokes an unlocking prompt. At this time, if the user needs to quickly invoke the specific playback control function, the user draws the graphic "Z" on the screen, and the specific playback control function in the media playback application is invoked after the matching is successful. If the user needs to use another function of the mobile phone, the user draws a graphic "N" on the screen, and after the matching is successful, the mobile phone is unlocked in a default mode.

In an implementation, assuming that the mobile phone is unlocked using a digital password, based on usage habits, the user can record a password "1111" as the "unlock operation" and record a password "2222" as the "invoke operation". In actual use, after the user takes out the mobile phone and executes the wake-up operation, the screen of the mobile phone invokes an unlocking prompt. At this time, if the user needs to quickly invoke the specific playback control function, the user enters the password "2222", and the specific playback control function in the media playback application is invoked after the matching is successful. If the user needs to use another function of the mobile phone, the user enters the password "1111", and after the matching is successful, the mobile phone is unlocked in a default mode.

It can be seen that the foregoing method can effectively distinguish between the "quick invocation" operation and the "unlocking" operation without affecting normal usage habits of the user.

It can be understood that, in an implementation, different predetermined operations (such as different gestures, different passwords, etc.) can be used to distinguish different playback control functions, for example, "slide left" is associated with the "switch to a previous media file" function, "slide right" is associated with the "switch to the next media file" function, "slide up" is associated with the "pause" function, and "slide down" is associated with the "stop" function, so as to achieve quick invocation of different playback control functions.

It can be understood that the quick invocation of a specific playback control function in the implementation of the present patent is only used for schematically illustrating "quick invocation of a function in an application", and it is not a limitation on the specific implementation solution and the application scenario of the present patent. In addition, different buttons and operation gestures can be associated with different functions in the same application, or can be associated with functions in different applications, so as to implement quick invocation of multiple functions in different applications.

Corresponding to the foregoing method, the present patent further provides an apparatus for invoking a function in an application. Referring to FIG. 6, the apparatus can include: a detection control module 110, configured to obtain an operation of a user on user equipment; and an invocation control module 120, configured to invoke a function in an application associated with a predetermined user operation when the obtained operation matches the predetermined user operation.

In a specific implementation of the present patent, a sensing module is configured on the user equipment.

The detection control module 110 can be specifically configured to obtain a result of detecting a user operation by the sensing module; and the invocation control module 120 can be specifically configured to invoke the function in the application associated with the predetermined user operation after input of the predetermined user operation is detected.

In a specific implementation of the present patent, the detection control module 110 can be specifically configured to obtain the result of detecting a user operation by the sensing module when the user equipment is in a non-usage state, where the non-usage state includes a locked state, a sleep state, and/or a standby state.

In a specific implementation of the present patent, the detection control module 110 can be specifically configured to obtain the result of detecting a user operation by the sensing module when the user equipment is woken from a sleep state and is in a locked state.

In a specific implementation of the present patent, the detection control module 110 can be specifically configured to obtain the result of detecting a user operation by the sensing module when a predetermined button is pressed.

In a specific implementation of the present patent, the invocation control module 120 can be specifically configured: to further determine whether the user inputs correct authentication information after input of the predetermined user operation is detected and to invoke the function in the application associated with the predetermined user operation if the user inputs correct authentication information.

In a specific implementation of the present patent, the sensing module is an acceleration sensor; and the predetermined user operation is a shaking operation on the user equipment, where a quantity of times of shaking and an amplitude of the shaking operation are respectively greater than or equal to preselected thresholds.

In a specific implementation of the present patent, the sensing module is a gyroscope; and the predetermined user operation is a swing operation on the user equipment, where a quantity of times of swinging and an amplitude of the swing operation are respectively greater than or equal to preselected thresholds.

In a specific implementation of the present patent, a button is configured on the user equipment.

The detection control module 110 can be specifically configured to obtain a pressing operation of the user on the button of the user equipment; and the predetermined user operation can specifically include an operation of pressing a predetermined button.

In a specific implementation of the present patent, a touch input module is configured on the user equipment.

The detection control module 110 can be specifically configured to obtain a touch gesture that is inputted by the user on the touch input module; and the predetermined user operation can specifically include an operation of inputting a predetermined touch gesture.

In a specific implementation of the present patent, a fingerprint module is configured on the user equipment.

The detection control module 110 can be specifically configured to obtain a fingerprint that is inputted by the user on the fingerprint module; and the predetermined user operation can specifically include inputting preselected fingerprint information.

In a specific implementation of the present patent, the invocation control module 120 can be specifically configured to invoke an information image display function interface in an application including an information image, so as to display an information image on a screen of the user equipment.

The present patent further provides a barcode payment apparatus, applied to user equipment with a sensing module. Referring to FIG. 7, the apparatus can include: a detection control module 210, configured to obtain an operation of a user on user equipment; and a payment barcode display control module 220, configured to invoke a payment barcode display interface in a payment application when the obtained operation matches a predetermined user operation, so as to display a barcode image used for payment on a screen of the user equipment.

In a specific implementation of the present patent, a sensing module is configured on the user equipment.

The detection control module 210 can be specifically configured to obtain a result of detecting a user operation by the sensing module; and the payment barcode display control module 220 can be specifically configured to invoke the payment barcode display interface in the payment application when input of the predetermined user operation is detected, so as to display the barcode image used for payment on the screen of the user equipment.

It can be understood that, the barcode payment apparatus can be an implementation of the function invocation apparatus in the foregoing application in a specific application environment. Therefore, for description of a specific implementation principle of the barcode payment apparatus, refer to the description of the function invocation apparatus in the foregoing implementation and the method in the foregoing implementation. The description will not be repeated in this implementation.

In addition, for an implementation process of functions of each module in the apparatus, refer to an implementation process of a corresponding step in the foregoing method; details are not described herein.

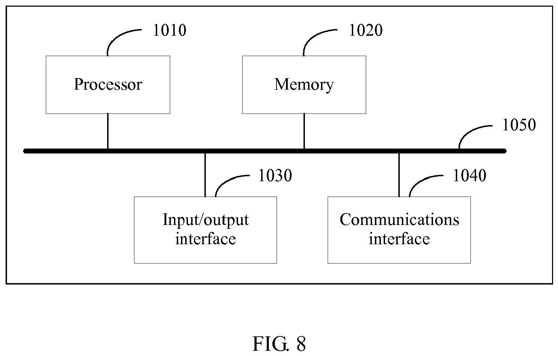

The function invocation apparatus or the barcode payment apparatus in the foregoing application provided by the present patent can be applied to devices such as a mobile phone, a tablet computer, a smart watch, etc. FIG. 8 is a schematic structural diagram illustrating a device used to configure the apparatus provided in the present patent. The device can include a processor 1010, a memory 1020, an input/output interface 1030, a communications interface 1040, and a bus 1050. The processor 1010, the memory 1020, the input/output interface 1030, and the communications interface 1040 implement mutual communication and connection by using the bus 1050.

The processor 1010 can be a general CPU (Central Processing Unit), a microprocessor, an application-specific integrated circuit (ASIC), or one or more integrated circuits, and is configured to execute a related program, so as to implement the technical solution provided in the present patent.

The memory 1020 can be implemented in the form of a ROM (Read Only Memory), a RAM (Random Access Memory), a static storage device, a dynamic storage device, or the like. The memory 1020 can store an operating system and other application programs. When software or hardware is used to implement the technical solutions provided by the present patent, related program code is stored in the memory 1020, and is invoked and executed by the processor 1010.

The input/output interface 1030 is configured to connect input/output modules for information input and output. The input/output module can be configured as a component in the device (not shown in the figure) or externally connected to the device to provide corresponding functions. The input device can include a keyboard, a mouse, a touchscreen, a microphone, various types of sensors, etc. The output device can include a display, a speaker, a vibrator, an indicator lamp, etc.

The communications interface 1040 is configured to connect a communications module (not shown in the figure), so as to realize communication and interaction between the present device and other devices. The communications module can implement communication through a wired method (for example, USB, network cable, etc.), and can also implement communication through a wireless method (for example, mobile network, WIFI, Bluetooth, etc.).

The bus 1050 includes a channel through which information is transmitted between parts (such as the processor 1010, the memory 1020, the input/output interface 1030, and the communications interface 1040) of the device.

It should be noted that although the foregoing device shows only the processor 1010, the memory 1020, the input/output interface 1030, the communications interface 1040, and the bus 1050. In a specific implementation process, the device can further include other necessary components to achieve normal operation. In addition, a person skilled in the art should understand that the foregoing device can include only components required for implementing the solution of the present patent, and does not necessarily include all components shown in the figure.

According to the descriptions of the implementations, a person skilled in the art can clearly understand that the present patent can be implemented by software and necessary universal hardware platforms. Based on such an understanding, the technical solutions of the present patent essentially or the part contributing to the existing technology can be implemented in a form of a software product. The software product is stored in a storage medium, such as a ROM/RAM, a hard disk, or an optical disc, and includes several instructions for instructing a computer device (which can be a personal computer, a server, or a network device) to perform the methods described in the implementations or some parts of the implementations of the present patent.

The implementations in the present disclosure are all described in a progressive method. For same or similar parts in the implementations, reference can be made to these implementations, and each implementation focuses on a difference from other implementations. Especially, the apparatus implementation is basically similar to the method implementations, and therefore is briefly described. For a relevant part, reference can be made to the description in the part of the method implementations. The apparatus implementations described above are merely examples, in which the modules described as separate components can or cannot be physically separated, and the functions of the modules can be implemented in a same or a plurality of software and/or hardware modules when the solution of the present patent is implemented. A part or all of the modules can be selected according to actual needs to achieve the objectives of the solutions of the present implementations. A person of ordinary skill in the art can understand and implement the implementations of the present invention without creative efforts.

## Claims

1. A method for invoking a function in an application, wherein the method is performed by a user equipment in a locked state, sleep state, and/or a standby state, the method comprising:
detecting (S101), by a sensing module configured on the user equipment, an operation of a user on the user equipment;
determining whether a predetermined button is pressed while the user inputs the operation on the user equipment, wherein the predetermined button comprises a physical button or virtual touch key provided on the user equipment;
in response to determining that the predetermined button is pressed while the user inputs the operation, determining whether the detected operation of the user matches a predetermined user operation; and
in response to i) determining that the predetermined button is pressed while the user inputs the operation and ii) determining that the detected operation of the user matches the predetermined user operation, invoking (S102) a function in an application associated with the predetermined user operation, wherein invoking the function in the application comprises
a) determining whether the user inputs correct authentication information and
b) in response to determining that the user inputs correct authentication information, invoking the function in the application associated with the predetermined user operation.

2. The method according to claim 1, wherein i) detecting an operation of a user on the user equipment comprises detecting a user operation by the sensing module and ii) invoking a function in an application associated with a predetermined user operation when the detected operation matches the predetermined user operation comprises invoking the function in the application associated with the predetermined user operation after input of the predetermined user operation is detected.

3. The method according to claim 2, wherein detecting a user operation by the sensing module comprises:
detecting a user operation by the sensing module when the user equipment is in a non-usage state, wherein the non-usage state comprises a locked state, a sleep state, and/or a standby state.

4. The method according to claim 3, wherein detecting a user operation by the sensing module when the user equipment is in a non-usage state comprises detecting a user operation by the sensing module when the user equipment is woken from a sleep state and is in a locked state.

5. The method according to claim 2, wherein detecting a user operation by the sensing module comprises detecting a user operation by the sensing module when a predetermined button is pressed.

6. The method according to claim 2, wherein the sensing module is an acceleration sensor and the predetermined user operation is a shaking operation on the user equipment, wherein a quantity of times of shaking and an amplitude of the shaking operation are respectively greater than or equal to preselected thresholds.

7. The method according to claim 2, wherein the sensing module is a gyroscope and the predetermined user operation is a swing operation on the user equipment, wherein a quantity of times of swinging and an amplitude of the swing operation are respectively greater than or equal to preselected thresholds.

8. The method according to claim 1, wherein
a button is configured on the user equipment;
detecting an operation of a user on the user equipment comprises: detecting a pressing operation of the user on the button of the user equipment; and
predetermined user operation comprises an operation of pressing a predetermined button.

9. The method according to claim 1, wherein
a touch input module is configured on the user equipment;
detecting an operation of a user on the user equipment comprises detecting a touch gesture that is inputted by the user on the touch input module; and
the predetermined user operation comprises an operation of inputting a predetermined touch gesture.

10. The method according to claim 1, wherein
a fingerprint module is configured on the user equipment;
detecting an operation of a user on the user equipment comprises detecting fingerprint information that is inputted by the user on the fingerprint module; and
the predetermined user operation is inputting preselected fingerprint information.

11. The method according to claim 1, wherein invoking a function in an application associated with the predetermined user operation comprises invoking an information image display function interface in an application comprising an information image, so as to display an information image on a screen of the user equipment.

12. The method of claim 1, wherein the application comprises a payment application and the function in the application comprises a payment barcode display interface, and wherein invoking the function in the application associated with the predetermined user operation when the detected operation matches the predetermined user operation comprises:
invoking a payment barcode display interface in a payment application when the detected operation matches a predetermined user operation, so as to display a barcode image used for payment on a screen of the user equipment.

13. The method according to claim 12, wherein invoking a payment barcode display interface in a payment application when the detected operation matches a predetermined user operation, so as to display a barcode image used for payment on a screen of the user equipment comprises:
invoking the payment barcode display interface in the payment application when input of the predetermined user operation is detected, so as to display the barcode image used for payment on the screen of the user equipment.

14. An apparatus for invoking a function in an application, wherein the apparatus comprises multiple modules (110, 120, 210, 220) configured to perform the method of any one of claims 1 to 13.

## Patentansprüche

1. Verfahren zum Aufrufen einer Funktion in einer Anwendung, wobei das Verfahren durch ein Anwendergerät in einem gesperrten Zustand, einem Schlafzustand und/oder einem Bereitschaftszustand ausgeführt wird, wobei das Verfahren Folgendes umfasst:
Detektieren (S101) durch ein Erfassungsmodul, das auf dem Anwendergerät konfiguriert ist, einer Bedienung eines Anwenders an dem Anwendergerät;
Bestimmen, ob ein vorgegebener Knopf gedrückt wird, während der Anwender die Bedienung an dem Anwendergerät eingibt, wobei der vorgegebene Knopf einen physikalischen Knopf oder eine virtuelle Berührungstaste, die an dem Anwendergerät vorgesehen ist, umfasst;
als Reaktion auf das Bestimmen, dass der vorgegebene Knopf gedrückt wird, während der Anwender die Bedienung eingibt, Bestimmen, ob die detektierte Bedienung des Anwenders mit einer vorgegebenen Anwenderbedienung übereinstimmt; und
als Reaktion auf i) das Bestimmen, dass der vorgegebene Knopf gedrückt wird, während der Anwender die Bedienung eingibt, und ii) das Bestimmen, dass die detektierte Bedienung des Anwenders mit der vorgegebenen Anwenderbedienung übereinstimmt, Aufrufen (S102) einer Funktion in einer Anwendung, die der vorgegebenen Anwenderbedienung zugeordnet ist, wobei das Aufrufen der Funktion in der Anwendung Folgendes umfasst:
a) Bestimmen, ob der Anwender korrekte Authentifizierungsinformationen eingibt, und
b) als Reaktion auf das Bestimmen, dass der Anwender korrekte Authentifizierungsinformationen eingibt, Aufrufen der Funktion in der Anwendung, die der vorgegebenen Anwenderbedienung zugeordnet ist.

2. Verfahren nach Anspruch 1, wobei i) das Detektieren einer Bedienung eines Anwenders an dem Anwendergerät umfasst, durch das Erfassungsmodul eine Anwenderbedienung zu detektieren, und ii) das Aufrufen einer Funktion in einer Anwendung, die einer vorgegebenen Anwenderbedienung zugeordnet ist, wenn die detektierte Bedienung mit der vorgegebenen Anwenderbedienung übereinstimmt, umfasst, die Funktion in der Anwendung aufzurufen, die der vorgegebenen Anwenderbedienung zugeordnet ist, nachdem die Eingabe der vorgegebenen Anwenderbedienung detektiert wurde.

3. Verfahren nach Anspruch 2, wobei das Detektieren einer Anwenderbedienung durch das Erfassungsmodul Folgendes umfasst:
Detektieren einer Anwenderbedienung durch das Erfassungsmodul, wenn das Anwendergerät in einem Nichtnutzungszustand ist, wobei der Nichtnutzungszustand einen gesperrten Zustand, einen Schlafzustand und/oder einen Bereitschaftszustand umfasst.

4. Verfahren nach Anspruch 3, wobei das Detektieren einer Anwenderbedienung durch das Erfassungsmodul, wenn das Anwendergerät in einem Nichtnutzungszustand ist, umfasst, eine Anwenderbedienung durch das Erfassungsmodul zu detektieren, wenn das Anwendergerät von einem Schlafzustand aufgeweckt wurde und in einem gesperrten Zustand ist.

5. Verfahren nach Anspruch 2, wobei das Detektieren einer Anwenderbedienung durch das Erfassungsmodul umfasst, eine Anwenderbedienung durch das Erfassungsmodul zu detektieren, wenn ein vorgegebener Knopf gedrückt wird.

6. Verfahren nach Anspruch 2, wobei das Erfassungsmodul ein Beschleunigungssensor ist und die vorgegebene Anwenderbedienung ein Schüttelvorgang an dem Anwendergerät ist, wobei eine Häufigkeit des Schüttelns und eine Amplitude des Schüttelvorgangs jeweils größer als im Voraus gewählte Schwellenwerte oder gleich diesen sind.

7. Verfahren nach Anspruch 2, wobei das Erfassungsmodul ein Gyroskop ist und die vorgegebene Anwenderbedienung ein Schwingvorgang an dem Anwendergerät ist, wobei eine Häufigkeit des Schwingens und eine Amplitude des Schwingvorgangs jeweils größer als im Voraus gewählte Schwellenwerte oder gleich diesen sind.

8. Verfahren nach Anspruch 1, wobei
ein Knopf auf dem Anwendergerät konfiguriert ist;
das Detektieren einer Anwenderbedienung an dem Anwendergerät Folgendes umfasst: Detektieren eines Drückvorgangs des Anwenders auf den Knopf des Anwendergeräts; und
die vorgegebene Anwenderbedienung eine Bedienung des Drückens eines vorgegebenen Knopfes umfasst.

9. Verfahren nach Anspruch 1, wobei
ein Berührungseingabemodul an dem Anwendergerät konfiguriert ist;
das Detektieren einer Bedienung eines Anwenders an dem Anwendergerät umfasst, eine Berührungshandlung zu detektieren, die durch den Anwender an dem Berührungseingabemodul eingegeben wird; und
die vorgegebene Anwenderbedienung eine Bedienung des Eingebens einer vorgegebenen Berührungshandlung umfasst.

10. Verfahren nach Anspruch 1, wobei
ein Fingerabdruckmodul an dem Anwendergerät konfiguriert ist;
das Detektieren einer Bedienung eines Anwenders an dem Anwendergerät umfasst, Fingerabdruckinformationen zu detektieren, die durch den Anwender an dem Fingerabdruckmodul eingegeben werden; und
die vorgegebene Anwenderbedienung ist, im Voraus gewählte Fingerabdruckinformationen einzugeben.

11. Verfahren nach Anspruch 1, wobei das Aufrufen einer Funktion in einer Anwendung, die der vorgegebenen Anwenderbedienung zugeordnet ist, umfasst, eine Informationsbildanzeigefunktionsschnittstelle in einer Anwendung aufzurufen, die ein Informationsbild umfasst, um ein Informationsbild auf einem Bildschirm des Anwendergeräts anzuzeigen.

12. Verfahren nach Anspruch 1, wobei die Anwendung eine Zahlungsanwendung umfasst und die Funktion in der Anwendung eine Zahlungsbarcode-Anzeigeschnittstelle umfasst und wobei das Aufrufen der Funktion in der Anwendung, die der vorgegebenen Anwenderbedienung zugeordnet ist, wenn die detektierte Bedienung mit der vorgegebenen Anwenderbedienung übereinstimmt, Folgendes umfasst:
Aufrufen einer Zahlungsbarcode-Anzeigeschnittstelle in einer Zahlungsanwendung, wenn die detektierte Bedienung mit einer vorgegebenen Anwenderbedienung übereinstimmt, um ein Barcodebild, das für eine Zahlung verwendet wird, auf einem Bildschirm des Anwendergeräts anzuzeigen.

13. Verfahren nach Anspruch 12, wobei das Aufrufen einer Zahlungsbarcode-Anzeigeschnittstelle in einer Zahlungsanwendung, wenn die detektierte Bedienung mit einer vorgegebenen Anwenderbedienung übereinstimmt, um ein Barcodebild, das für eine Zahlung verwendet wird, auf einem Bildschirm des Anwendergeräts anzuzeigen, Folgendes umfasst:
Aufrufen der Zahlungsbarcode-Anzeigeschnittstelle in der Zahlungsanwendung, wenn eine Eingabe der vorgegebenen Anwenderbedienung detektiert wird, um das Barcodebild, das für eine Zahlung verwendet wird, auf dem Bildschirm des Anwendergeräts anzuzeigen.

14. Vorrichtung zum Aufrufen einer Funktion in einer Anwendung, wobei die Vorrichtung mehrere Module (110, 120, 210, 220) umfasst, die konfiguriert sind, das Verfahren nach einem der Ansprüche 1 bis 13 auszuführen.

## Revendications

1. Procédé d'appel d'une fonction dans une application, le procédé étant réalisé par un équipement utilisateur dans un état verrouillé, un état de sommeil et/ou un état de veille, le procédé comprenant :
la détection (S101), par un module capteur configuré sur l'équipement utilisateur, d'une action d'un utilisateur sur l'équipement utilisateur ;
la détermination si un bouton prédéterminé est enfoncé ou non tandis que l'utilisateur entre l'action sur l'équipement utilisateur, le bouton prédéterminé comprenant un bouton physique ou une touche tactile virtuelle dont est pourvu l'équipement utilisateur ;
en réponse à la détermination que le bouton prédéterminé est enfoncé tandis que l'utilisateur entre l'action, la détermination si l'action détectée de l'utilisateur correspond ou non à une action d'utilisateur prédéterminée ; et
en réponse à i) la détermination que le bouton prédéterminé est enfoncé tandis que l'utilisateur entre l'action et ii) la détermination que l'action détectée de l'utilisateur correspond à l'action d'utilisateur prédéterminée, l'appel (S102) d'une fonction dans une application associée à l'action d'utilisateur prédéterminée, l'appel de la fonction dans l'application comprenant
a) la détermination si l'utilisateur entre ou non des informations d'authentification correctes et
b) en réponse à la détermination que l'utilisateur entre des informations d'authentification correctes, l'appel de la fonction dans l'application associée à l'action d'utilisateur prédéterminée.

2. Procédé selon la revendication 1, dans lequel i) la détection d'une action d'un utilisateur sur l'équipement utilisateur comprend la détection d'une action d'utilisateur par le module capteur et ii) l'appel d'une fonction dans une application associée à une action d'utilisateur prédéterminée lorsque l'action détectée correspond à l'action d'utilisateur prédéterminée comprend l'appel de la fonction dans l'application associée à l'action d'utilisateur prédéterminée suite à la détection de l'entrée de l'action d'utilisateur prédéterminée.

3. Procédé selon la revendication 2, dans lequel la détection d'une action d'utilisateur par le module capteur comprend :
la détection d'une action d'utilisateur par le module capteur lorsque l'équipement d'utilisateur est dans un état de non-utilisation, l'état de non-utilisation comprenant un état verrouillé, un état de sommeil et/ou un état de veille.

4. Procédé selon la revendication 3, dans lequel la détection d'une action d'utilisateur par le module capteur lorsque l'équipement utilisateur est dans un état de non-utilisation comprend la détection d'une action d'utilisateur par le module capteur lorsque l'équipement utilisateur est réveillé d'un état de sommeil et est dans un état verrouillé.

5. Procédé selon la revendication 2, dans lequel la détection d'une action d'utilisateur par le module capteur comprend la détection d'une action d'utilisateur par le module capteur lorsqu'un bouton prédéterminé est enfoncé.

6. Procédé selon la revendication 2, dans lequel le module capteur est un capteur d'accélération et l'action d'utilisateur prédéterminée est une action de secousse sur l'équipement utilisateur, un nombre de secousses et une amplitude de l'action de secousse étant respectivement supérieurs ou égaux à des seuils présélectionnés.

7. Procédé selon la revendication 2, dans lequel le module capteur est un gyroscope et l'action d'utilisateur prédéterminée est une action d'oscillation sur l'équipement utilisateur, un nombre d'oscillations et une amplitude de l'action d'oscillation étant respectivement supérieurs ou égaux à des seuils présélectionnés.

8. Procédé selon la revendication 1, dans lequel
un bouton est configuré sur l'équipement utilisateur ;
la détection d'une action d'un utilisateur sur l'équipement utilisateur comprend : la détection d'une action d'enfoncement du bouton de l'équipement utilisateur par l'utilisateur ; et
l'action d'utilisateur prédéterminée comprend une action d'enfoncement d'un bouton prédéterminé.

9. Procédé selon la revendication 1, dans lequel
un module d'entrée tactile est configuré sur l'équipement utilisateur ;
la détection d'une action d'un utilisateur sur l'équipement utilisateur comprend la détection d'un geste tactile qui est entré par l'utilisateur sur le module d'entrée tactile ; et
l'action d'utilisateur prédéterminée comprend une action d'entrée d'un geste tactile prédéterminé.

10. Procédé selon la revendication 1, dans lequel
un module à empreinte digitale est configuré sur l'équipement utilisateur ;
la détection d'une action d'un utilisateur sur l'équipement utilisateur comprend la détection d'informations d'empreinte digitale qui sont entrées par l'utilisateur sur le module à empreinte digitale ; et
l'action d'utilisateur prédéterminée est l'entrée d'informations d'empreinte digitale présélectionnées.

11. Procédé selon la revendication 1, dans lequel l'appel d'une fonction dans une application associée à l'action d'utilisateur prédéterminée comprend l'appel d'une interface de fonction d'affichage d'image d'informations dans une application comprenant une image d'informations, de manière à afficher une image d'informations sur un écran de l'équipement utilisateur.

12. Procédé selon la revendication 1, dans lequel l'application comprend une application de paiement et la fonction dans l'application comprend une interface d'affichage de code-barres de paiement, et dans lequel l'appel de la fonction dans l'application associée à l'action d'utilisateur prédéterminée lorsque l'action détectée correspond à l'action d'utilisateur prédéterminée comprend :
l'appel d'une interface d'affichage de code-barres de paiement dans une application de paiement lorsque l'action détectée correspond à une action d'utilisateur prédéterminée, de manière à afficher une image de code-barres servant au paiement sur un écran de l'équipement utilisateur.

13. Procédé selon la revendication 12, dans lequel l'appel d'une interface d'affichage de code-barres de paiement dans une application de paiement lorsque l'action détectée correspond à une action d'utilisateur prédéterminée, de manière à afficher une image de code-barres servant au paiement sur un écran de l'équipement utilisateur, comprend :
l'appel de l'interface d'affichage de code-barres de paiement dans l'application de paiement lors de la détection de l'entrée de l'action d'utilisateur prédéterminée, de manière à afficher l'image de code-barres servant au paiement sur l'écran de l'équipement utilisateur.

14. Appareil d'appel d'une fonction dans une application, l'appareil comprenant de multiples modules (110, 120, 210, 220) configurés pour réaliser le procédé selon l'une quelconque des revendications 1 à 13.
